# EUROPEAN PATENT SPECIFICATION

(11) **EP 3 421 944 B1**
(45) Date of publication and mention of the grant of the patent: **23.11.2022**
(21) Application number: 18177142.9
(22) Date of filing: 12.06.2018
(51) Int. Cl.: G01D 11/24

(54) **HOUSING OF SENSOR AND SENSOR**
GEHÄUSE EINES SENSORS UND SENSOR
BOÎTIER DE CAPTEUR ET CAPTEUR

(30) Priority: 29.06.2017 CN 201720779861 U
(43) Date of publication of application: 02.01.2019
(73) Proprietor: Siemens Ltd. China, Beijing 100102 (CN)
(72) Inventor: LIU, Hai, Kunshan, 215300 (CN); TAO, Xi, Suzhou, 215128 (CN); BIE, Hai Gang, Shanghai, 201104 (CN); CHEN, Liang, Suzhou, 215000 (CN)
(74) Representative: Isarpatent

(56) References cited:
- EP-A1- 2 848 909
- DE-A1-102013 015 773
- GB-A- 2 175 693
- US-A1- 2007 242 723
- US-B1- 6 247 360

## Description

### Technical Field

The present invention relates to a housing structure, and in particular, to a housing of a sensor. The present invention further relates to a sensor having the foregoing housing.

### Related Art

Existing sensors, such as humidity sensors, temperature sensors, and gas quality sensors are applied to a plurality of environmental conditions. It is difficult for sensors to ensure the accuracy of data monitored in various environments. For example, the temperature sensors may be affected by heat dissipation of itself and fail to accurately monitor the temperature, and the humidity sensors may be invaded by external liquids such as rainwater and fail to accurately measure the humidity. In addition, the sensors also have a risk of being damaged under unfavorable environmental conditions, such as the foregoing situations of failing to perform heat dissipation in time and failing to resist water.

In GB 2 715 693 A an instrument for measuring ambient air temperature is disclosed. A thermometer and a radiation shield are mounted within a vertical duct. Air is drawn upwardly over the thermometer by a fan.

Further, in US 6 247 360 B1 a cylindrical housing is disclosed which is provided with outside protecting louvers and central cylindrical aspirated flow paths. A motor driven fan is placed at the top of a central cylindrical flow path.

In DE 10 2013 015773 A1 an enclosure for outdoor climate measuring devices is disclosed comprising a fan.

Further, US 2007/242723 A1 discloses an apparatus for measuring the temperature of outside air provided with a thermometer mounted in a housing connected to a forced ventilation blower for drawing a current outside air across the thermometer.

### SUMMARY

An objective of the present invention is to provide a housing that is of a sensor and that resolves at least the foregoing and/or other technical problems. The housing can ensure a heat dissipation condition of the sensor and is waterproof, and can ensure the accuracy of data monitored by the sensor.

Another objective of the present invention is to provide a sensor having the foregoing housing.

The present invention provides a housing of a sensor, where along a mounting direction, the housing includes: a base, a shield body, a first cover body, and a second cover body. The base is provided with a plurality of first ventilation holes. The shield body can be connected to the base, and enclose an accommodating cavity together with the base. The accommodating cavity can communicate with external gas through the first ventilation holes, and an end, away from the base along the mounting direction, of the shield body is provided with a second ventilation opening. The first cover body can be disposed and shielded on the end, provided with the second ventilation opening, of the shield body, where between the first cover body and the shield body, there is a first gap that can communicate the second ventilation opening with the external gas, so that an air flow formed by the external gas in the first gap drives, by using the second ventilation opening, gas in the accommodating cavity to flow out. The second cover body can be disposed and shielded on the first cover body.

Because between the first cover body and the shield body, there is the first gap that can communicate the second ventilation opening with the external gas, if the external gas flows, the flowing gas drives, by using the first gap, the gas on the second ventilation opening to flow, to cause a Bernoulli effect, making gas in the accommodating cavity flow, and forming negative pressure in the accommodating cavity to make the external gas on the side of the base flow into the accommodating cavity through the first ventilation hole. In the flowing process, the gas flows through the sensing module, and brings away heat in the sensing module and the accommodating cavity. Because a hot air flow ascends by itself, the hot air flow also accelerates the gas flowing process, to implement rapid heat dissipation. Moreover, under the double protection of the first cover body and the second cover body, external liquids such as rainwater can be effectively prevented from invading into the accommodating cavity. In addition, because the external gas constantly flows through the first ventilation hole of the base, it can be ensured that the sensing module can always come into contact with the external environment, thereby implementing accurate detection.

In a schematic implementation of the housing of the sensor, the base includes a mounting plate and a side wall that is disposed on one side of the mounting plate and that can be connected to the shield body, and the plurality of first ventilation holes separately run through the side wall. The first ventilation holes are disposed on the side wall, thereby more facilitating formation of an oriented and stable gas flow in the accommodating cavity.

In a schematic implementation of the housing of the sensor, the end, away from the base along the mounting direction, of the shield body is provided with a dome-shaped connection portion, an inwardly-recessed side of the dome-shaped connection portion faces towards the base, and the second ventilation opening is disposed on a top of the dome-shaped connection portion. Due to the dome-shaped design, a gas channel on top of the accommodating cavity can be gently tightened, thereby more facilitating formation of an oriented and stable gas flow in the accommodating cavity.

In a schematic implementation of the housing of the sensor, the first cover body has a dome-shaped shield portion that can shield the dome-shaped connection portion and a shield wall disposed surrounding an edge of the dome-shaped shield portion. Use of the dome-shaped shield portion facilitates formation of the oriented and stable gas flow, and use of the shield wall facilitates further water resistance.

In a schematic implementation of the housing of the sensor, the second cover body is a dome-shaped cover body that can shield the dome-shaped shield portion, and there is a second gap between the second cover body and the dome-shaped shield portion. Use of the dome-shaped cover body as the second cover body facilitates guiding external liquids such as rainwater. The second gap between the second cover body and the dome-shaped shield portion facilitates heat isolation, to protect internal components under strong irradiation of the sun.

In a schematic implementation of the housing of the sensor, the housing further includes a fan, and the fan is disposed on the second ventilation opening, to blow gas of the shield body to the first gap. The design of the fan can accelerate flowing of the gas, to enhance the heat dissipation effect. In addition, the fan can help the external gas flow, more quickly, into the accommodating cavity through the first ventilation hole, thereby improving the detection accuracy of the sensing module.

In a schematic implementation of the housing of the sensor, the housing further includes a third cover body, which can be connected to one side, away from the shield body, of the base, the third cover body and the base form a ventilation cavity, the ventilation cavity communicates with the plurality of first ventilation holes, and the third cover body is provided with a plurality of third ventilation holes that can communicate with the ventilation cavity.

In a schematic implementation of the housing of the sensor, the housing further includes a camera, and the camera can be connected to one side, away from the shield body, of the base.

The present invention further provides a sensor, including the foregoing housing and a sensing module, where the sensing module is disposed in the accommodating cavity. The sensor may be a temperature sensor, a humidity sensor, a gas quality sensor, a gas detector, or a light sensor.

Preferred embodiments will be described below in a comprehensive manner with reference to the accompanying drawings, and the foregoing characteristics, technical features, advantages, and implementations of the housing of the sensor and the sensor are further described.

### BRIEF DESCRIPTION OF THE DRAWINGS

The following accompanying drawings merely schematically describe and explain the present invention, and do not limit its scope.
FIG. 1 is a schematic diagram of a breakdown structure of a schematic implementation of a housing of a sensor;
FIG. 2 is a schematic structural diagram after assembly of the housing of the sensor shown in FIG. 1;
FIG. 3 is a schematic diagram of a cross-sectional structure of the housing of the sensor shown in FIG. 1, and a schematic diagram of a cross-sectional structure of a schematic implementation of the sensor;
FIG. 4 is a schematic diagram of a partial breakdown structure of another schematic implementation of the housing of the sensor;
FIG. 5 is a schematic diagram of a cross-sectional structure of the housing of the sensor shown in FIG. 4, and a schematic diagram of a cross-sectional structure of another schematic implementation of the sensor; and
FIG. 6 is a schematic structural diagram of still another schematic implementation of the housing of the sensor.

### Description of reference signs

11 Third cover body
114 Ventilation cavity
115 Third ventilation hole
12 Base
122 Mounting plate
124 Side wall
125 First ventilation hole
13 Camera
14 Shield body
142 Dome-shaped connection portion
144 Accommodating cavity
145 Second ventilation hole
15 Fan
16 First cover body
162 First gap
163 Dome-shaped shield portion
164 Shield wall
18 Second cover body
182 Second gap
20 Sensing module

### DETAILED DESCRIPTION

For a clearer understanding of the technical features, objectives, and effects of the invention, specific implementations thereof will now be described with reference to the accompanying drawings, in which same reference signs represent components having same or similar structures with same functions.

In this text, "schematic" means "serving as an example, instance, or description", and any illustration or implementation described herein as "schematic" should not be interpreted as a more preferred or more advantageous technical solution.

To make the figures concise, only the parts related to the present invention are schematically shown in the figures, and they do not represent the actual structure of the product. In addition, to make the figures concise and comprehensible, in some of the figures, only one of components having same structures or functions is schematically drawn, or only one of them is marked.

In this text, "up", "down", "front", "rear", "left", "right", and the like are only used to indicate the location relationship between related parts, rather than limit their absolute locations.

In this text, "first", "second", and the like are only used to distinguish one from the other, rather than indicate their importance, order, and the like.

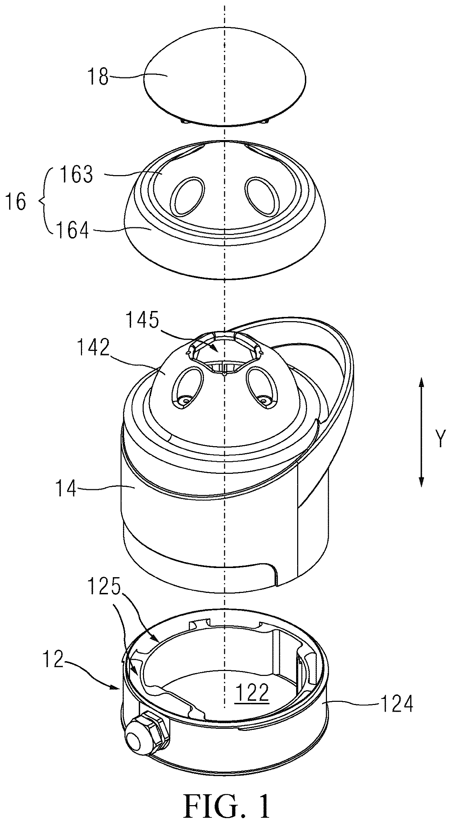

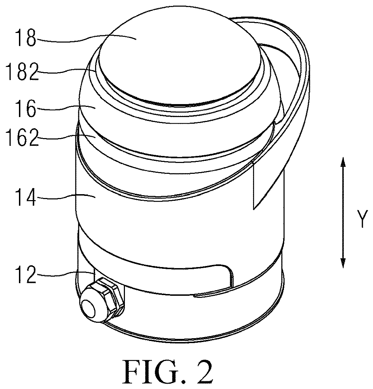

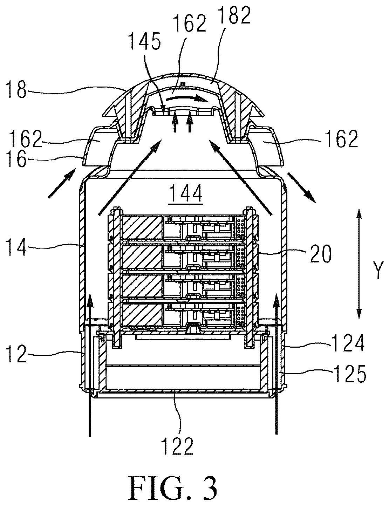

FIG. 1 is a schematic diagram of a breakdown structure of a schematic implementation of a housing of a sensor. FIG. 2 is a schematic structural diagram after assembly of the housing of the sensor shown in FIG. 1. FIG. 3 is a schematic diagram of a cross-sectional structure of the housing of the sensor shown in FIG. 1, and a schematic diagram of a cross-sectional structure of a schematic implementation of the sensor. As shown in FIG. 1, FIG. 2, and FIG. 3, along the mounting direction Y indicated by the arrows in the figures and from bottom to top, the housing of the sensor includes a base 12, a shield body 14, a first cover body 16, and a second cover body 18.

The base 12 is provided with a plurality of first ventilation holes 125. The shield body 14 can be connected to the base 12, and enclose an accommodating cavity 144 together with the base 12. As shown in FIG. 3, the accommodating cavity 144 communicates with the first ventilation holes 125, and communicates with external gas through the first ventilation holes 125, and an end, away from the base 12 along the mounting direction Y, of the shield body 14 is further provided with a second ventilation opening 145.

The first cover body 16 can be disposed and shielded on the end, provided with the second ventilation opening 145, of the shield body 14, where between the first cover body 16 and the shield body 14, there is a first gap 162 that can communicate the second ventilation opening 145 with the external gas. Referring to FIG. 2 and FIG. 3, an air flow formed by the external gas in the first gap 162 can drive, by using the second ventilation opening 145, gas in the accommodating cavity 144 to flow out.

The second cover body 18 can be disposed and shielded on the first cover body 16.

In the housing that of the sensor and that uses the foregoing design, the sensing module 20 may be placed in the accommodating cavity 144 to form a sensor. As shown in FIG. 3, because between the first cover body 16 and the shield body 14, there is the first gap 162 that can communicate with the second ventilation opening 145 and the external gas, if the external gas flows, for example, after the gas in the figure flows from a left side to a right side, the flowing gas flows through the first gap 162 on the left side of the figure, and drives, along the direction represented by the arrow in the figure, gas on the gap 162 on the second ventilation opening 145 to flow, and then flows out from the first gap 162 on the right side. A person skilled in the art may understand that the actual gas flow direction is not limited only to the flow direction from the left side to the right side. In the process of flowing from the left side to the right side, the gas causes a Bernoulli effect on the second ventilation opening 145, making gas in the accommodating cavity 144 flow along the direction represented by the arrow in the figure, and forming negative pressure in the accommodating cavity 144 to make the external gas on the side of the base 12 flow into the accommodating cavity 144 through the first ventilation hole 125. In the flowing process, the gas flows through the sensing module 20, and brings away heat in the sensing module 20 and the accommodating cavity 144. Because a hot air flow ascends by itself, the hot air flow also accelerates the gas flowing process, to implement rapid heat dissipation. Moreover, under the double protection of the first cover body 16 and the second cover body 18, external liquids such as rainwater can be effectively prevented from invading into the accommodating cavity 144. In addition, because the external gas constantly flows through the first ventilation hole 125 of the base 12, it can be ensured that the sensing module 20 can always come into contact with the external environment, thereby implementing accurate detection.

In the implementation shown in FIG. 1, the base 12 includes a mounting plate 122 and a side wall 124 disposed on one side of the mounting plate 122 (the upper side of the mounting plate in the figure). The side wall 124 can be connected to the shield body 14. The plurality of first ventilation holes 125 separately run through the side wall 124. The first ventilation holes 125 are disposed on the side wall 124, thereby more facilitating formation of an oriented and stable gas flow in the accommodating cavity 144. Certainly, according to different design requirements, the structure and the shape of the base 12 may be not limited to those shown in the figure.

In the implementation shown in FIG. 1, the end, away from the base 12 along the mounting direction Y, of the shield body 14 is provided with the dome-shaped connection portion 142. In this text, "dome-shaped" refers to a hemispherical or hemispherical-like structure. An inwardly-recessed side of the dome-shaped connection portion 142 faces towards the base 12. The second ventilation opening 145 is disposed on the top provided with the dome-shaped connection portion 142. Due to the dome-shaped design, as shown in FIG. 3, a gas channel on top of the accommodating cavity 144 can be gently tightened, thereby more facilitating formation of an oriented and stable gas flow in the accommodating cavity 144. Certainly, according to different design requirements, the structure and the shape of the shield body 14 may be not limited to those shown in the figure.

In the implementation shown in FIG. 1, to match the shape of the dome-shaped connection portion 142, the first cover body 16 has the dome-shaped shield portion 163 that can shield the dome-shaped connection portion 142 and the shield wall 164 that is disposed surrounding an edge of the dome-shaped shield portion 163. Use of the dome-shaped shield portion 163 facilitates formation of the oriented and stable gas flow, and use of the shield wall 164 facilitates further water resistance.

In the implementation shown in FIG. 1, the second cover body 18 is a dome-shaped cover body 18 that can shield the dome-shaped shield portion 162, and there is a second gap 182 between the second cover body 18 and the dome-shaped shield portion 163. Use of the dome-shaped cover body 18 as the second cover body 18 facilitates guiding external liquids such as rainwater. The second gap 182 between the second cover body 18 and the dome-shaped shield portion 163 facilitates heat isolation, to protect internal components under strong irradiation of the sun.

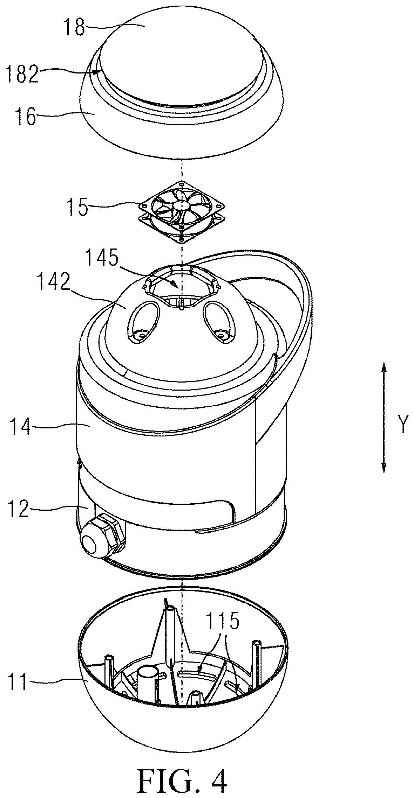

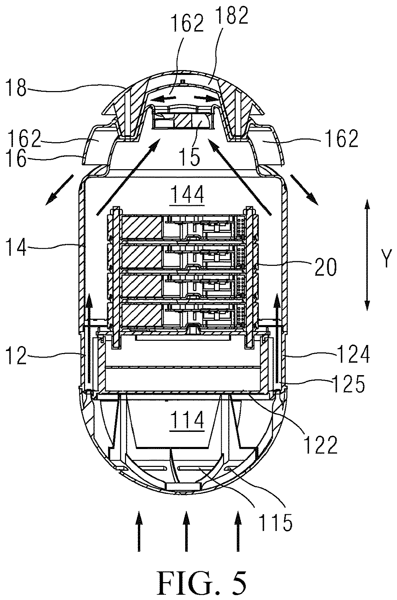

FIG. 4 is a schematic diagram of a partial breakdown structure of another schematic implementation of the housing of the sensor. FIG. 5 is a schematic diagram of a cross-sectional structure of the housing of the sensor shown in FIG. 4, and a schematic diagram of a cross-sectional structure of another schematic implementation of the sensor. As shown in FIG. 4 and FIG. 5, the housing of the sensor may further include a fan 15. The fan 15 is disposed on the dome-shaped shield portion 145, to blow gas of the shield body 14 to the first gap 162, as shown by the arrow in the figure. The design of the fan 15 can accelerate flowing of the gas, to enhance the heat dissipation effect. In addition, the fan 15 can help the external gas flow, more quickly, into the accommodating cavity 144 through the first ventilation hole 125, thereby improving the detection accuracy of the sensing module 20.

In the implementation shown in FIG. 4 and FIG. 5, the housing of the sensor further includes a third cover body 11, which can be connected to one side, away from the shield body 14, of the base 12, the third cover body 11 and the base 12 form a ventilation cavity 114, the ventilation cavity 114 communicates with the plurality of first ventilation holes 125, and the third cover body 11 is provided with a plurality of (only two are marked in the figures) third ventilation holes 115 that can communicate with the ventilation cavity 114.

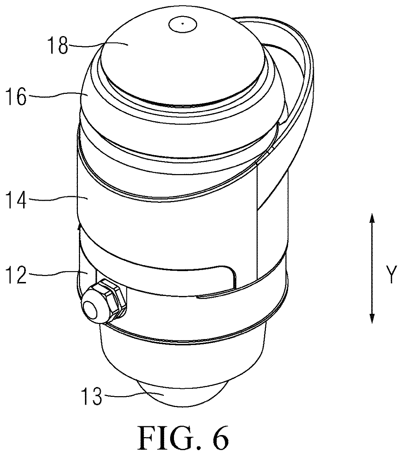

FIG. 6 is a schematic structural diagram of still another schematic implementation of the housing of the sensor. As shown in FIG. 6, the housing of the sensor further includes a camera 13, which can be connected to one side, away from the shield body 14, of the base 12, to form a monitor.

The present invention further provides a sensor. As shown in FIG. 3 and FIG. 5, the sensor includes the foregoing housing of the sensor and a sensing module 20. The sensing module 20 is disposed in the accommodating cavity 144.

It should be understood that although this specification is described according to various embodiments, not every embodiment includes only one independent technical solution. The present narrative manner of the specification is merely for clearness. A person skilled in the art should consider the specification as a whole. The technical solutions in the embodiments can also be suitably combined to form other implementations that can be understood by a person skilled in the art.

The series of detailed descriptions listed above are only specific descriptions of the practical embodiments of the present invention, and are not intended to limit the protection scope of the present invention.

## Claims

1. A housing of a sensor, wherein along a mounting direction (Y), the housing comprises:
a base (12), provided with a plurality of first ventilation holes (125);
a shield body (14), connected to the base (12), and enclosing an accommodating cavity (144) together with the base, wherein the accommodating cavity (144) communicates with external gas through the first ventilation holes (125), and an end, away from the base (12) along the mounting direction (Y), of the shield body (14) is provided with a second ventilation opening (145);
a first cover body (16), disposed and shielded on the end, provided with the second ventilation opening (145), of the shield body (14), wherein between the first cover body (16) and the shield body (14), there is a first gap (162) communicating the second ventilation opening (145) with the external gas, so that an air flow formed by the external gas in the first gap (162) drives, by using the second ventilation opening (145), gas in the accommodating cavity (144) to flow out; and
a second cover body (18), disposed and shielded on the first cover body (16).

2. The housing according to claim 1, wherein the base (12) comprises a mounting plate (122) and a side wall (124) that is disposed on one side of the mounting plate (122) and that is connected to the shield body (14), and the plurality of first ventilation holes (125) separately run through the side wall (124).

3. The housing according to claim 1 or claim 2, wherein the end, away from the base (12) along the mounting direction (Y), of the shield body (14) is provided with a dome-shaped connection portion (142), an inwardly-recessed side of the dome-shaped connection portion (142) faces towards the base (12), and the second ventilation opening (145) is disposed on a top of the dome-shaped connection portion (142).

4. The housing according to claim 3, wherein the first cover body (16) has a dome-shaped shield portion (163) that shields the dome-shaped connection portion (142) and a shield wall (164) disposed surrounding an edge of the dome-shaped shield portion (163).

5. The housing according to claim 4, wherein the second cover body (18) is a dome-shaped cover body (18) that shields the dome-shaped shield portion (163), and there is a second gap (182) between the second cover body (18) and the dome-shaped shield portion (163).

6. The housing according to any of the preceding claims, wherein the housing further comprises a fan (15), and the fan (15) is disposed on the second ventilation opening (145), to blow gas of the shield body (14) to the first gap (162).

7. The housing according any of the preceding claims, wherein the housing further comprises a third cover body (11), connected to one side, away from the shield body (14), of the base (12), the third cover body (11) and the base (12) form a ventilation cavity (114), the ventilation cavity (114) communicates with the plurality of first ventilation holes (125), and the third cover body (11) is provided with a plurality of third ventilation holes (115) communicating with the ventilation cavity (114).

8. The housing according to any of the preceding claims, wherein the housing further comprises a camera (13), and the camera (13) is connected to one side, away from the shield body (14), of the base (12).

9. A sensor, comprising:
the housing according to any one of claims 1 to 8; and
a sensing module (20), wherein the sensing module (20) is disposed in the accommodating cavity (144).

10. The sensor according to claim 9, wherein the sensor may be a temperature sensor, a humidity sensor, a gas quality sensor, a gas detector, or a light sensor.

## Patentansprüche

1. Gehäuse eines Sensors, wobei entlang einer Montagerichtung (Y) das Gehäuse Folgendes umfasst:
eine Basis (12), die mit einer Mehrzahl von ersten Belüftungslöchern (125) versehen ist;
einen Abschirmkörper (14), der mit der Basis (12) verbunden ist und einen Aufnahmehohlraum (144) zusammen mit der Basis umschließt, wobei der Aufnahmehohlraum (144) durch die ersten Belüftungslöcher (125) mit externem Gas in Verbindung steht und ein entlang der Montagerichtung (Y) von der Basis (12) entferntes Ende des Abschirmkörpers (14) mit einer zweiten Belüftungsöffnung (145) versehen ist;
einen ersten Abdeckkörper (16), der an dem mit der zweiten Belüftungsöffnung (145) versehenen Ende des Abschirmkörpers (14) angeordnet und abgeschirmt ist, wobei zwischen dem ersten Abdeckkörper (16) und dem Abschirmkörper (14) ein erster Spalt (162) vorhanden ist, der die zweite Belüftungsöffnung (145) mit dem externen Gas verbindet, so dass ein durch das externe Gas in dem ersten Spalt (162) gebildeter Luftstrom unter Verwendung der zweiten Belüftungsöffnung (145) Gas in den Aufnahmehohlraum (144) zum Ausströmen treibt; und
einen zweiten Abdeckkörper (18), der an dem ersten Abdeckkörper (16) angeordnet und abgeschirmt ist.

2. Gehäuse nach Anspruch 1, wobei die Basis (12) eine Montageplatte (122) und eine Seitenwand (124), die auf einer Seite der Montageplatte (122) angeordnet ist und die mit dem Abschirmkörper (14) verbunden ist, umfasst und die Mehrzahl von ersten Belüftungslöchern (125) einzeln durch die Seitenwand (124) verlaufen.

3. Gehäuse nach Anspruch 1 oder Anspruch 2, wobei das entlang der Montagerichtung (Y) von der Basis (12) entfernte Ende des Abschirmkörpers (14) mit einem kuppelförmigen Verbindungsabschnitt (142) versehen ist, wobei eine nach innen vertiefte Seite des kuppelförmigen Verbindungsabschnitts (142) hin zu der Basis (12) weist und die zweite Belüftungsöffnung (145) auf einer Oberseite des kuppelförmigen Verbindungsabschnitts (142) angeordnet ist.

4. Gehäuse nach Anspruch 3, wobei der erste Abdeckkörper (16) einen kuppelförmigen Abschirmabschnitt (163) aufweist, der den kuppelförmigen Verbindungsabschnitt (142) und eine Abschirmwand (164), die einen Rand des kuppelförmigen Abschirmabschnitts (163) umgebend angeordnet ist, abschirmt.

5. Gehäuse nach Anspruch 4, wobei der zweite Abdeckkörper (18) ein kuppelförmiger Abdeckkörper (18) ist, der den kuppelförmigen Abschirmabschnitt (163) abschirmt, und wobei ein zweiter Spalt (182) zwischen dem zweiten Abdeckkörper (18) und dem kuppelförmigen Abschirmabschnitt (163) vorhanden ist.

6. Gehäuse nach einem der vorhergehenden Ansprüche, wobei das Gehäuse ferner einen Lüfter (15) umfasst und der Lüfter (15) an der zweiten Belüftungsöffnung (145) angeordnet ist, um Gas des Abschirmkörpers (14) zu dem ersten Spalt (162) zu blasen.

7. Gehäuse nach einem der vorhergehenden Ansprüche, wobei das Gehäuse ferner einen dritten Abdeckkörper (11) umfasst, der mit einer von dem Abschirmkörper (14) entfernten Seite der Basis (12) verbunden ist, wobei der dritte Abdeckkörper (11) und die Basis (12) einen Belüftungshohlraum (114) bilden, wobei der Belüftungshohlraum (114) mit der Mehrzahl von ersten Belüftungslöchern (125) in Verbindung steht und der dritte Abdeckkörper (11) mit einer Mehrzahl von dritten Belüftungslöchern (115) versehen ist, die mit dem Belüftungshohlraum (114) in Verbindung stehen.

8. Gehäuse nach einem der vorhergehenden Ansprüche, wobei das Gehäuse ferner eine Kamera (13) umfasst und die Kamera (13) mit einer von dem Abschirmkörper (14) entfernten Seite der Basis (12) verbunden ist.

9. Sensor, der Folgendes umfasst:
das Gehäuse nach einem der Ansprüche 1 bis 8; und
ein Erfassungsmodul (20), wobei das Erfassungsmodul (20) in dem Aufnahmehohlraum (144) angeordnet ist.

10. Sensor nach Anspruch 9, wobei der Sensor ein Temperatursensor, ein Feuchtigkeitssensor, ein Gasqualitätssensor, ein Gasdetektor oder ein Lichtsensor sein kann.

## Revendications

1. Boîtier de capteur, dans lequel, le long d'une direction de montage (Y), le boîtier comprend :
une base (12), pourvue d'une pluralité de premiers trous de ventilation (125) ;
un corps de protection (14), relié à la base (12), et entourant une cavité de logement (144) conjointement avec la base, dans lequel la cavité de logement (144) communique avec un gaz externe par le biais des premiers trous de ventilation (125), et une extrémité, éloignée de la base (12), le long de la direction de montage (Y), du corps de protection (14), est pourvue d'une deuxième ouverture de ventilation (145) ;
un premier corps de couverture (16), disposé, et fournissant une protection, sur l'extrémité, pourvue de la deuxième ouverture de ventilation (145), du corps de protection (14), dans lequel, entre le premier corps de couverture (16) et le corps de protection (14), il y a un premier espace (162) faisant communiquer la deuxième ouverture de ventilation (145) avec le gaz externe, pour qu'un écoulement d'air formé par le gaz externe dans le premier espace (162) force, en utilisant la deuxième ouverture de ventilation (145), un gaz dans la cavité de logement (144) à sortir ; et
un deuxième corps de couverture (18), disposé, et fournissant une protection, sur le premier corps de couverture (16) .

2. Boîtier selon la revendication 1, dans lequel la base (12) comprend une plaque de montage (122) et une paroi latérale (124) qui est disposée sur un côté de la plaque de montage (122) et qui est reliée au corps de protection (14), et la pluralité de premiers trous de ventilation (125) s'étendent séparément à travers la paroi latérale (124).

3. Boîtier selon la revendication 1 ou la revendication 2, dans lequel l'extrémité, éloignée de la base (12), le long de la direction de montage (Y), du corps de protection (14), est pourvue d'une partie de liaison en forme de dôme (142), un côté évidé, vers l'intérieur, de la partie de liaison en forme de dôme (142) est tourné vers la base (12), et la deuxième ouverture de ventilation (145) est disposée sur un haut de la partie de liaison en forme de dôme (142).

4. Boîtier selon la revendication 3, dans lequel le premier corps de couverture (16) a une partie de protection en forme de dôme (163), qui protège la partie de liaison en forme de dôme (142), et une paroi de protection (164) disposée pour entourer un bord de la partie de protection en forme de dôme (163).

5. Boîtier selon la revendication 4, dans lequel le deuxième corps de couverture (18) est un corps de couverture en forme de dôme (18) qui protège la partie de protection en forme de dôme (163), et il y a un second espace (182) entre le deuxième corps de couverture (18) et la partie de protection en forme de dôme (163).

6. Boîtier selon l'une quelconque des revendications précédentes, dans lequel le boîtier comprend en outre un ventilateur (15), et le ventilateur (15) est disposé sur la deuxième ouverture de ventilation (145), pour souffler un gaz du corps de protection (14) jusqu'au premier espace (162).

7. Boîtier selon l'une quelconque des revendications précédentes, dans lequel le boîtier comprend en outre un troisième corps de couverture (11), relié à un côté, éloigné du corps de protection (14), de la base (12), le troisième corps de couverture (11) et la base (12) forment une cavité de ventilation (114), la cavité de ventilation (114) communique avec la pluralité de premiers trous de ventilation (125), et le troisième corps de couverture (11) est pourvu d'une pluralité de troisièmes trous de ventilation (115) communiquant avec la cavité de ventilation (114).

8. Boîtier selon l'une quelconque des revendications précédentes, dans lequel le boîtier comprend en outre une caméra (13), et la caméra (13) est reliée à un côté, éloigné du corps de protection (14), de la base (12).

9. Capteur, comprenant :
le boîtier selon l'une quelconque des revendications 1 à 8 ; et
un module de détection (20), dans lequel le module de détection (20) est disposé dans la cavité de logement (144).

10. Capteur selon la revendication 9, dans lequel le capteur peut être un capteur de température, un capteur d'humidité, un capteur de qualité de gaz, un détecteur de gaz, ou un capteur de lumière.
